# EUROPEAN PATENT APPLICATION

(11) **EP 3 476 363 A1**
(43) Date of publication of application: **01.05.2019**
(21) Application number: 18201928.1
(22) Date of filing: 23.10.2018
(51) Int. Cl.: A61C 13/00, A61C 13/12, B23C 3/34, B23C 3/16

(54) **PROCESSING METHOD FOR MAKING DENTAL DEVICES**

(30) Priority: 25.10.2017 JP 2017205792
(71) Applicant: DGSHAPE Corporation, Hamamatsu-shi, Shizuoka 431-2103 (JP)
(72) Inventor: SAITO, Koji, Shizuoka, Shizuoka 4312103 (JP); MIYAMOTO, Kazuhito, Shizuoka, Shizuoka 4312103 (JP)
(74) Representative: Grünecker Patent- und Rechtsanwälte PartG mbB

(57) **Abstract**

To provide processing methods for making dental devices with which a processing time can be reduced.

A processing method for making a dental device including the steps of: carving an area having a predetermined shape out of a workpiece by cutting a groove along an area having the predetermined shape in the workpiece using a first processing tool, the groove having a processed width that is larger than a diameter of a bit of the first processing tool; and forming an object having a desired shape by performing a cut on the area having the predetermined shape using a second processing tool.

## Description

### Technical field

The present invention relates to processing methods for making dental devices.

### Background art

Processing methods for making dental devices with which objects having a predetermined processed surface are formed by performing cuts on workpieces using a processing tool or tools have been known.

For example, Japanese Patent Laid-open No. H10-244439 discloses a processing method for making dental devices of objects with which an unnecessary portion of a workpiece is cut and removed to obtain a predetermined object by reciprocating, while shifting a processing tool for roughing cuts by a constant pitch in one direction, the processing tool in a direction perpendicular to the direction in which the processing tool reciprocates.

Conventional processing methods for making dental devices form a desired object by performing roughing cuts on a workpiece in a roughing stage, followed by a finishing stage.

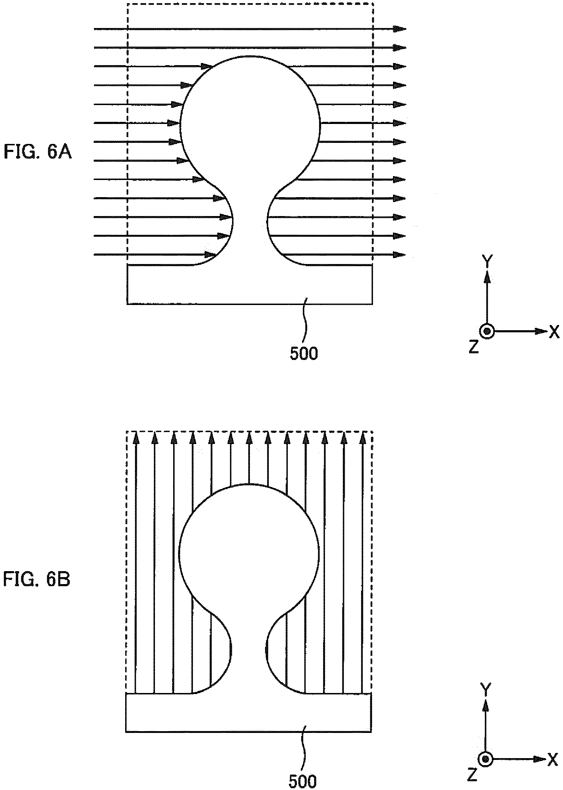

In the roughing stage of the conventional processing methods for making dental devices, a processing method, so-called parallel milling, is used. In parallel milling, as in two examples shown in Figs. 6A and 6b, an unnecessary portion of a workpiece 500 is gradually cut out by moving a processing tool along a processing path in a certain direction while shifting the processing tool at predetermined intervals. In other words, conventional processing methods for making dental devices require a long processing time due to the cuts performed on the entire unnecessary portion during the roughing stage.

The present invention was made with respect to the aforementioned circumstance, and an object to be achieved by the present invention is to provide processing methods for making dental devices with which a processing time can be reduced.

### Summary of the invention

A main invention to achieve the aforementioned object is a processing method for making a dental device including the steps of: carving an area having a predetermined shape out of a workpiece by cutting a groove along an area having the predetermined shape in the workpiece using a first processing tool, the groove having a processed width that is larger than a diameter of a bit of the first processing tool; and forming an object having a desired shape by performing a cut on the area having the predetermined shape using a second processing tool. Other features of the present invention will be apparent from the descriptions of the specification below and drawings.

According to the present invention, it is possible to provide processing methods for making dental devices with which a processing time can be reduced.

### Brief description of the drawings

Fig. 1 is a diagram for explaining a structure of a processing system according to an embodiment;
Fig. 2A is a diagram for explaining a processing method for making dental devices according to the embodiment;
Fig. 2B is a diagram for explaining a processing method for making dental devices according to the embodiment;
Fig. 3A is a diagram for explaining the processing method for making dental devices according to the embodiment;
Fig. 3B is a diagram for explaining the processing method for making dental devices according to the embodiment;
Fig. 4A is a diagram for explaining the processing method for making dental devices according to the embodiment;
Fig. 4B is a diagram for explaining the processing method for making dental devices according to the embodiment;
Fig. 4C is a diagram for explaining the processing method for making dental devices according to the embodiment;
Fig. 5A is a diagram for explaining the processing method for making dental devices according to the embodiment;
Fig. 5B is a diagram for explaining the processing method for making dental devices according to the embodiment; and
Fig. 6A is a diagram for explaining a conventional processing method for making dental devices; and
Fig. 6B is a diagram for explaining a conventional processing method for making dental devices.

### Detailed description of the invention

### = Embodiments =

Referring to the drawings, an embodiment of the present invention is described. The embodiment described below includes various limitations that are technically preferable for the purpose of implementing the present invention; therefore, the scope of the present invention is not limited to the following embodiment and illustrated examples,

### <Processing system>

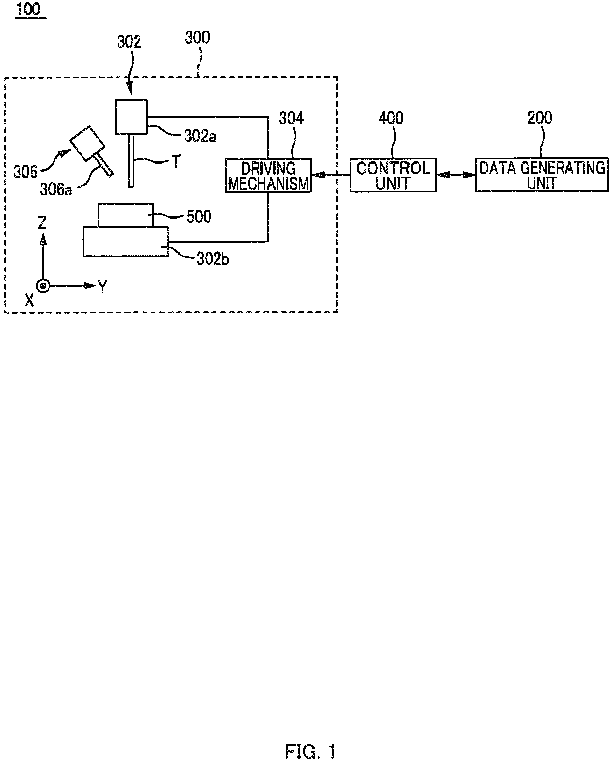

Fig. 1 is a diagram for explaining a structure of a processing system 100 according to this embodiment. The processing system 100 of this embodiment includes a data generating unit 200, a processing unit 300, and a control unit 400.

The data generating unit 200 is for generating data (hereinafter, referred to as "processing data") representing a shape of a processed surface of an object 500c having a desired shape, formed to a workpiece 500. The data generating unit 200 supplies the generated processing data to the control unit 400. The processing data is generated based on 3D data for the object 500c and 3D data for the workpiece 500. For example, when a dental prosthesis is made, processing data is generated using 3D data obtained by scanning the mouth with a CCD camera or X-ray CT. The 3D data for the object 500c is, for example, STL data, solid data used for 3D CAD systems, or data in the 3MF or AMF format used for 3D printers. The generated data may have any format as long as the data can be used for the processing unit 300.

The processing unit 300 is for forming, under the control of the control unit 400, the object 500c to the workpiece 500 based on the processing data generated by the data generating unit 200. As shown in Fig. 1, the processing unit 300 has a cutting mechanism 302, a driving mechanism 304, and a liquid coolant delivery mechanism 306.

The cutting mechanism 302 carries a processing tool T and performs cuts on the workpiece 500 using the processing tool T. The cutting mechanism 302 has a tool holder 302a and a workpiece holder 302b. The tool holder 302a holds the processing tool T used for cutting. The processing tool T is a rod-shaped tool for performing cuts on the workpiece 500. In Fig. 1, the tool holder 302a is holding the processing tool T. The processing tool T is not limited to a single tool; instead, two or more different kinds of tools may be used. In this embodiment, a processing tool T1 for a roughing stage and a processing tool T2 for a finishing stage are used as the processing tool T and details thereof are described later. The workpiece holder 302b holds the workpiece 500 to be subjected to cuts during cutting. Examples of materials of the workpiece 500 to which the processing method for making dental devices according to this embodiment can be applied include materials for dental prostheses such as glass ceramics and hybrid resins. Alternatively, the processing method can be applied to metal materials for metal processing.

In Fig. 1, the directions perpendicular to the length of the processing tool T are defined as X- and Y- directions and the direction along the length of the processing tool T is defined as a Z-direction. The X-, Y-, and Z-directions are perpendicular to each other.

The driving mechanism 304 moves, using a driving motor (not shown), the processing tool T relative to the workpiece 500 (the workpiece holder 302b). The driving mechanism 304 has, for example, five driving axes (the X-, Y-, and Z-axes, and axes which rotate about the X- and Y-axes, respectively).

The liquid coolant delivery mechanism 306 delivers a liquid coolant to the workpiece 500 to inhibit the workpiece 500 from becoming hot due to the heat that develops during cutting. The liquid coolant delivery mechanism 306 has a nozzle 306a and delivers the liquid coolant to the workpiece 500 by injecting the liquid coolant through the nozzle 306a toward the workpiece 500.

The control unit 400 is for controlling the cutting mechanism 302 to form the object 500c to the workpiece 500. Specifically, the control unit 400 receives processing data from the data generating unit 200 and controls the driving mechanism 304 of the cutting mechanism 302 to adjust a relative position between the processing tool and the workpiece 500 (the workpiece holder 302b) such that an unnecessary portion of the workpiece 500 is cut. The unnecessary portion is an area other than the area occupied by the object 500c having a desired shape in the workpiece 500.

### <Processing method for making dental devices>

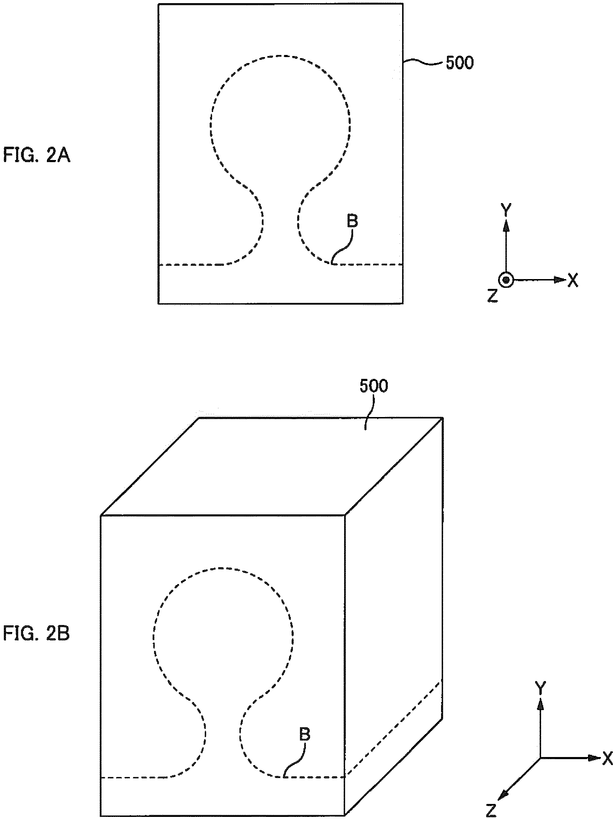

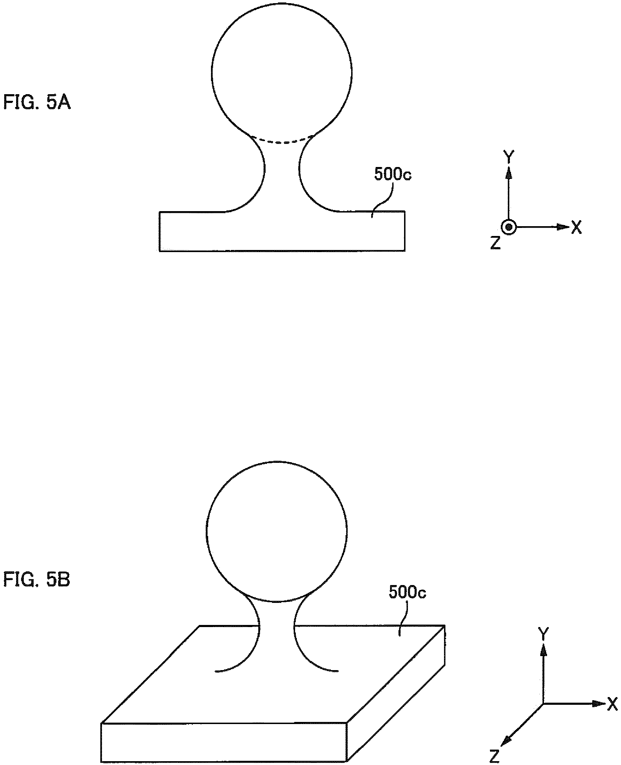

Referring to Figs. 2A to 5B, a processing method for making dental devices using the processing system 100 according to this embodiment is described. Figs. 2A to 5B are diagrams for explaining a processing method for making dental devices according to this embodiment.

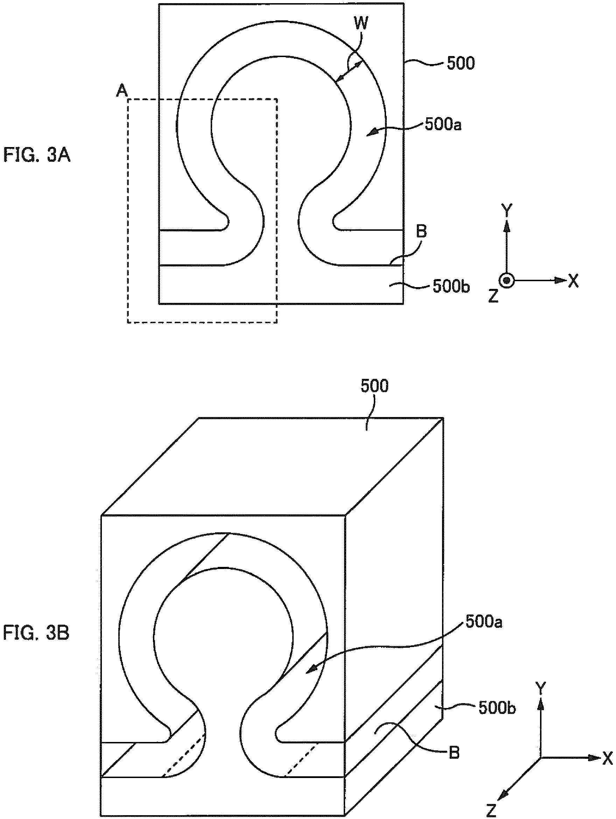

The processing method for making dental devices according to this embodiment includes a roughing stage and a finishing stage. Fig. 2A shows top view of the workpiece 500 before the roughing stage. Fig. 2B shows perspective view of the workpiece 500 before the roughing stage. Fig. 3A shows top view of the workpiece 500 after the roughing stage. Fig. 3B shows perspective view of the workpiece 500 after the roughing stage. Fig. 5A shows top view of the workpiece 500 after the finishing stage, that is, the finished object 500c having a desired shape. Fig. 5B shows perspective view of the workpiece 500 after the finishing stage, that is, the finished object 500c having a desired shape.

The roughing stage is for carving an area 500b having a predetermined shape out of the workpiece 500. For the area 500b having the predetermined shape, any area in the workpiece 500 will do as long as it is an area that includes the area occupied by the object 500c having the desired shape (an area larger than the object 500c having the desired shape). As used herein, the term "in the workpiece 500" means an area inside the workpiece 500 and the surface thereof. The area 500b having the predetermined shape whose size is closer to the size of the object 500c having the desired shape is more preferable because an area to be cut during the subsequent finishing stage becomes smaller.

The broken line shown in Figs. 2A and 2B corresponds to a boundary B between the unnecessary portion and the area 500b having the predetermined shape in the workpiece 500. In this embodiment, the area 500b having the predetermined shape is congruent in terms of a cross-sectional shape of the workpiece 500 in an arbitrary plane perpendicular to the Z-axis.

In the roughing stage, the first processing tool T1 is used for performing cuts on the workpiece 500. It is preferable that the first processing tool T1 is made of a superhard material such as a stainless steel. Further, it is preferable that the first processing tool T1 has a layer of diamond abrasive grains formed on a surface thereof. The layer of diamond abrasive grains is a layer formed by, for example, plating on the superhard material as a base material.

In the roughing stage, the aforementioned area 500b having the predetermined shape is carved out by cutting a groove 500a described below (Figs. 3A and 3B). The groove 500a is formed along the area 500b having the predetermined shape in the workpiece 500. In other words, the boundary B of the area 500b having the predetermined shape coincides with one of side walls of the groove 500a. Further, the groove 500a has a processed width W that is larger than a diameter of a bit D_{T1} of the first processing tool T1.

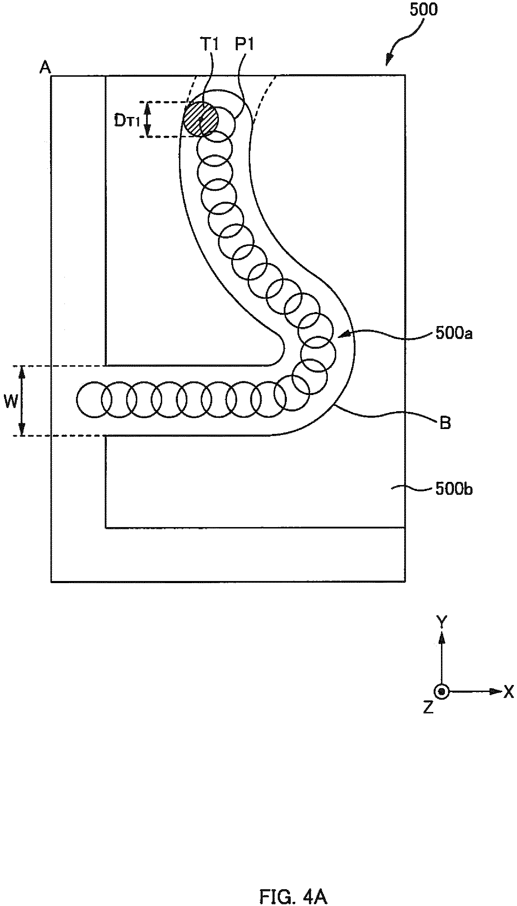

Referring to Figs. 4A to 4C, some examples of methods of cutting the groove 500a are described. In the following examples, the first processing tool T1 passes through the workpiece 500 in the Z-direction during cutting of the groove 500a. The groove 500a is cut using a side surface of the first processing tool T1. Figs. 4A to 4C show top views of the workpiece 500 seen in the Z-direction. These figures show cross sections of the first processing tool T1 and processing paths of the first processing tool T1 for cutting the groove 500a in each of the methods. In the roughing stage, each processing path corresponds to a path that the rotation axis of the first processing tool T1 follows.

The example shown in Fig. 4A is a method of cutting the groove 500a by repeatedly performing cuts along a circumferential processing path P1. In this figure, the area depicted by the symbol A in Fig. 3A is shown enlarged. With this method, the groove 500a is gradually cut from one end to the other by repeatedly performing cuts along the circumferential processing path P1. In this embodiment, the circumferential processing path P1 is a processing path along a circle followed within the area of the groove 500a and a plurality of such circles are aligned. The diameter of the circle is equal to the length obtained by subtracting the diameter of the bit D_{T1} of the first processing tool T1 from the processed width W (W - D_{T1}). The center of the circle is positioned at a point away from the boundary B of the area 500b having the predetermined shape by a distance W/2, and a plurality of points are aligned at intervals. By repeatedly performing cuts along such circles, the groove 500a having the processed width W can be cut. It should be noted that the circumferential processing path P1 is not limited to a circular path and may appropriately be determined in consideration of the shape of the groove 500a.

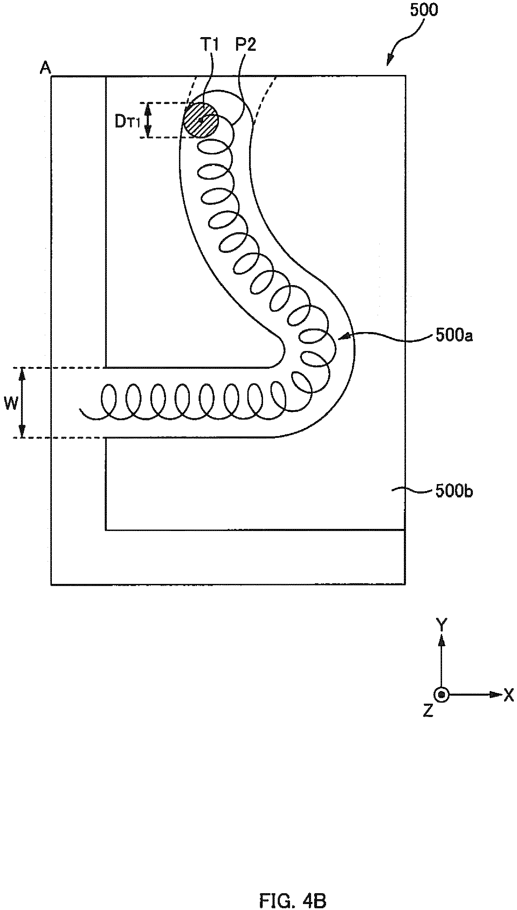

The example shown in Fig. 4B is a method of cutting the groove 500a by performing cuts along a spiral processing path P2. In this figure, the area depicted by the symbol A in Fig. 3A is shown enlarged. When a groove having a processed width W is cut, the spiral processing path P2 may just be followed within an area that is away from the boundary B of the area 500b having the predetermined shape by a distance equal to or larger than D_{T1}/2 but not larger than W - D_{T1}/2. As an example of the spiral processing path P2, a trochoid can be used. An example of the trochoid is a locus of a certain single point positioned at a distance W/2 - D_{T1}/2 from the center of a circle of diameter W when the circle rolls without slipping along the boundary B outside the area 500b having the predetermined shape. It should be noted that the trochoid is not limited thereto and factors such as the number of turns of the trochoid can appropriately be adjusted according to the shape of the boundary B.

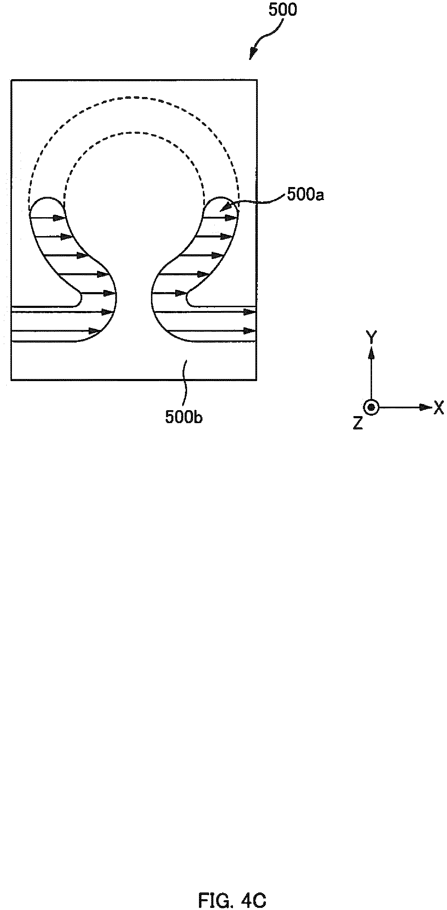

The example shown in Fig. 4C is a method of cutting the groove 500a by parallel milling. With parallel milling, a portion of the groove 500a is gradually cut, starting from an edge of the workpiece 500 by moving the first processing tool T1 along processing paths aligned in the same direction while shifting the first processing tool T1 at predetermined intervals. The parallel milling is useful when, for example, the shape of the boundary B has many straight portions along such one direction.

The three examples of the method of cutting the groove 500a have been described above. Cutting the groove 500a may be performed using at least one of the illustrated examples in Figs. 4A, 4B, and 4C and is not limited to one of these three methods. In other words, these three methods can appropriately be combined in consideration of the shape of the groove 500a. For example, in the shape of the groove 500a, a portion closer to a straight line is cut by parallel milling, and a curved portion may be cut by performing cuts along a circumferential processing path or a spiral processing path.

After the groove 500a is cut and before the operation proceeds to the roughing stage, the area 500b having the predetermined shape and the remaining unwanted portion that has been left uncut are separated from each other.

It should be noted that this embodiment has been described for an aspect in which the processed width W of the groove 500a is uniform but the present invention is not limited thereto. The groove 500a may have non-uniform processed widths W as long as at least the area 500b having the predetermined shape can be carved out of the workpiece 500 and the processed widths W are larger than the diameter of the bit D_{T1} of the first processing tool T1.

The finishing stage is for forming the object 500c having the desired shape by performing cuts on the area 500b having the predetermined shape that has been carved out in the roughing stage. In the finishing stage, cuts are performed using the second processing tool T2. The second processing tool T2 may be a conventional processing tool for finishing purposes, but a processing tool of a superhard material with a layer of diamond abrasive grains such as the aforementioned first processing tool T1 may also be used. Since the finishing stage requires more accurate cuts than in the roughing stage, it is preferable that a diameter of a bit D_{T2} of the second processing tool T2 is smaller than the diameter of the bit D_{T1} of the first processing tool T1. It should be noted that, since load on the processing tool is lighter in the finishing stage than in the roughing stage, the diameter of the bit D_{T2} of the second processing tool T2 can be smaller than the diameter of the bit

D_{T1} of the first processing tool T1. In the finishing stage, the object 500c having the desired shape can be formed using a conventional processing method for making dental devices such as parallel milling (Figs. 5A and 5B).

In the processing method for making dental devices according to this embodiment, the object 500c having the desired shape is formed through a two-stage process with the roughing and finishing stages, but the processing method for making dental devices according to the present invention is not limited thereto. That is, the processing method for making dental devices according to the present invention may further comprise, for example, one or more cutting stages between the roughing stage and the finishing stage.

As can be seen from the above, the processing method for making dental devices according to this embodiment includes the steps of: carving the area 500b having the predetermined shape out of the workpiece 500 by cutting the groove 500a along the area 500b having the predetermined shape in the workpiece 500 using the first processing tool T1, the groove 500a having the processed width W that is larger than the diameter of the bit D_{T1} of the first processing tool T1; and forming the object 500c having the desired shape by performing cuts on the area 500b having the predetermined shape using the second processing tool T2.

That is, the processing method for making dental devices according to this embodiment involves in carving the area 500b having the predetermined shape out of the workpiece 500 by cutting the groove 500a along the area 500b having the predetermined shape in the workpiece 500. This eliminates the necessity of performing cuts on the entire unnecessary portion of the workpiece 500, so that a processing time required for forming the object 500c having the desired shape can be reduced.

Further, since it is not necessary to perform cuts on the entire unnecessary portion of the workpiece 500, development of heat due to frictional resistance between the workpiece 500 and the first processing tool T1 can be suppressed, and a damage of the workpiece 500 resulting from the development of heat can be restrained. Moreover, since the groove 500a is cut along the area 500b having the predetermined shape, it is possible to introduce a liquid coolant into the groove 500a to efficiently cool the area 500b having the predetermined shape, restraining a damage which otherwise would occur when the area 500b having the predetermined shape becomes hot. Further, the processed width W of the groove 500a is determined to be larger than the diameter of the bit D_{T1} of the first processing tool T1. This can serve to reduce the size of a surface area where the first processing tool T1 contacts with the workpiece 500 during cutting. If the processed width W of the groove 500a is equal to the diameter of the bit D_{T1} of the first processing tool T1, an area of the side surface of the first processing tool T1 to contact with the workpiece 500 during cutting is half the side surface of the first processing tool T1 which is the maximum. Accordingly, cut resistance exerted on the first processing tool T1 during cutting becomes highest and the first processing tool T1 is under heavy loading due to cutting. In contrast, according to the processing method for making dental devices of this embodiment, an area of the side surface of the first processing tool T1 to contact with the workpiece 500 during cutting can be reduced to be smaller than the half of the side surface of the first processing tool T1. With this, it is possible to reduce the cut resistance exerted on the first processing tool T1 during cutting compared to the case where the processed width W of the groove 500a is equal to the diameter of the bit D_{T1} of the first processing tool T1. As a result, the load on the first processing tool T1 due to cutting is reduced and deterioration of the first processing tool T1 can thus be restrained, compared to the case where the processed width W of the groove 500a is equal to the diameter of the bit D_{T1} of the first processing tool T1.

Further, in this embodiment, cutting the groove 500a can be performed by at least one of three methods of: cutting the groove 500a by repeatedly performing a cut along the circumferential processing path P1, cutting the groove 500a by a cut along the spiral processing path P2, and cutting the groove 500a by parallel milling. As a result, the optimum processing paths can be selected and combined depending on the shape of the groove 500a. For example, one or more of the above three cutting methods can be used according to the degree of curvature of the groove 500a. For example, when the curvature of the side wall of the groove 500a is equal to or greater than a predetermined value in one groove 500a, cuts along the circumferential processing path P1 or cuts along the spiral processing path P2 are used. For a portion or portions where the curvature of the side wall of the groove 500a is smaller than the predetermined value, parallel milling can be used. On the other hand, when a plurality of curved portions are included in one groove 500a, cuts along the circumferential processing path P1 or cuts along the spiral processing path P2 are used for a portion or portions where the curvature of the side wall of the groove 500a is equal to or greater than a predetermined value, among the plurality of curved portions. When the curvature of the side wall of the groove 500a is smaller than the predetermined value, parallel milling can be used. As a result, it is possible to reduce the processing time required for the entire groove 500a and the shape of the entire groove 500a can be formed with high accuracy.

Further, in this embodiment, the first processing tool T1 is made of a superhard material. Accordingly, even when load is exerted on the first processing tool T1 due to cutting, the resistance to the load will be enhanced ac compared to the processing tool T made of a conventional material.

In this embodiment, the first processing tool T1 has a layer of diamond abrasive grains formed on a surface thereof. This can further reduce the load on the first processing tool T1 due to cutting, restraining deterioration of the first processing tool T1.

Although the embodiments of the present invention have been described above, these embodiments are given for the purpose of facilitating the understanding of the present invention and are not intended to limit the interpretation of the present invention. Further, the present invention can be changed and modified without departing from the spirit and scope thereof, and includes equivalents thereof.

## Claims

1. A processing method for making a dental device comprising the steps of:
carving an area having a predetermined shape out of a workpiece by cutting a groove along an area having the predetermined shape in the workpiece using a first processing tool, the groove having a processed width that is larger than a diameter of a bit of the first processing tool; and
forming an object having a desired shape by performing a cut on the area having the predetermined shape using a second processing tool.

2. The processing method according to Claim 1, wherein cutting the groove comprises at least one of:
cutting the groove by repeatedly performing a cut along a circumferential processing path;
cutting the groove by a cut along a spiral processing path; and
cutting the groove by parallel milling.

3. The processing method according to Claim 1, wherein the first processing tool is made of a superhard material.

4. The processing method according to Claim 3, wherein the first processing tool has a layer of diamond abrasive grains, the layer being formed on a surface of the first processing tool.
